(19) Europäisches Patentamt
European Patent Office
Office européen des brevets

(11) EP 3 784 002 B1

(12) EUROPEAN PATENT SPECIFICATION

(45) Date of publication and mention
of the grant of the patent:
**04.05.2022 Bulletin 2022/18**

(21) Application number: **19788468.7**

(22) Date of filing: **15.04.2019**

(51) International Patent Classification (IPC):
*H05B 6/70* (2006.01)    *H05B 6/68* (2006.01)

(52) Cooperative Patent Classification (CPC):
**H05B 6/705;** Y02B 40/00

(86) International application number:
**PCT/JP2019/016075**

(87) International publication number:
**WO 2019/203171 (24.10.2019 Gazette 2019/43)**

(54) **MICROWAVE HEATING DEVICE**

MIKROWELLENHEIZVORRICHTUNG

DISPOSITIF DE CHAUFFAGE PAR MICRO-ONDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2018 JP 2018081500**

(43) Date of publication of application:
**24.02.2021 Bulletin 2021/08**

(73) Proprietor: **Panasonic Intellectual Property Management Co., Ltd.**
**Osaka-shi, Osaka 540-6207 (JP)**

(72) Inventors:
• **KUBO, Masayuki**
**Osaka-shi, Osaka 540-6207 (JP)**
• **YOSHINO, Koji**
**Osaka-shi, Osaka 540-6207 (JP)**

• **SADAHIRA, Masafumi**
**Osaka-shi, Osaka 540-6207 (JP)**
• **NAKAMURA, Hideki**
**Osaka-shi, Osaka 540-6207 (JP)**

(74) Representative: **SSM Sandmair Patentanwälte Rechtsanwalt Partnerschaft mbB**
**Joseph-Wild-Straße 20**
**81829 München (DE)**

(56) References cited:
WO-A1-2014/119333     GB-A- 1 034 683
JP-A- 2014 049 178     JP-A- 2014 049 178
JP-A- 2014 072 117     JP-A- 2014 072 117
US-A- 4 851 630     US-A1- 2015 244 055

**Description**

**TECHNICAL FIELD**

The present disclosure relates to microwave heating devices such as microwave ovens.

**BACKGROUND ART**

As a microwave heating device of this type, for example, the device disclosed in JP 5816820 B2 has conventionally been known. The conventional microwave heating device includes: a heating chamber to accommodate a heating target object, a microwave generating unit to generate microwaves, a waveguide to cause the microwaves to propagate to the heating chamber. The waveguide is provided with a standing-wave stabilizing part for stabilizing the position of an in-tube standing wave which occurs inside the waveguide. In accordance with the conventional microwave heating device, the standing-wave stabilizing part suppresses the positional disturbance of the in-tube standing wave, which allows the microwave of a desired phase to be continuously emitted into the heating chamber. As a result, the heating target object placed in the heating chamber can be heated uniformly.

US 2015/244055 A1 describes a directional coupler which includes an opening in a wall surface of a waveguide, and a coupling line on an outer side of the waveguide. The opening is configured to not cross a tube axis of the waveguide in plan view, and to emit a circularly polarized wave. The coupling line includes first and second transmission lines and output parts disposed at both ends, the first and second transmission lines extending across the opening to cross the tube axis in plan view and being opposed to each other across the center of the opening. The first and second transmission lines are interconnected at a position displaced from an area vertically above the opening.

**Citation List**

**Patent Literature**

PTL 1: JP 5816820 B2
PTL 2: US 2015/244055 A1

The conventional microwave heating device, however, still has room for improvement from the viewpoint of more accurately detecting the state of an object being heated that will change as the heating progresses.

**SUMMARY OF THE INVENTION**

An object of the present disclosure is to provide a microwave heating device capable of more accurately detecting the state of an object being heated.

The aforementioned object is solved by the subject-matter of independent claim 1. The dependent claims are directed to advantageous embodiments.

The microwave heating device according to the invention is capable of more accurately detecting the state of an object being heated.

**BRIEF DESCRIPTION OF DRAWINGS**

FIG. 1 is a schematic diagram for illustrating a microwave heating device according to an embodiment of the present disclosure.
FIG. 2 is a schematic diagram for illustrating an example of a first modification of the microwave heating device according to the embodiment.
FIG. 3 is a schematic diagram for illustrating an example of a second modification of the microwave heating device according to the embodiment.
FIG. 4 is a schematic diagram for illustrating an example of a third modification of the microwave heating device according to the embodiment.
FIG. 5 is a perspective view of a directional coupler according to the embodiment.
FIG. 6 is a perspective view of the directional coupler according to the embodiment, in the state in which a printed circuit board has been removed.

FIG. 7 is a plan view of a waveguide according to the embodiment.

FIG. 8 is a circuit configuration diagram of the printed circuit board mounted on the directional coupler according to the embodiment.

FIG. 9 is a diagram for illustrating the principle that a cross opening emits a circularly polarized microwave.

FIG. 10 is a diagram for illustrating the direction and amount of a microwave that propagates through a microstrip line and varies with a lapse of time.

FIG. 11 is a diagram for illustrating the direction and amount of a microwave that propagates through the microstrip line and varies with a lapse of time.

FIG. 12A is a plan view showing an example of a first modification of the microstrip line.

FIG. 12B is a plan view showing an example of a second modification of the microstrip line.

FIG. 12C is a plan view showing an example of a third modification of the microstrip line.

FIG. 12D is a plan view showing an example of a fourth modification of the microstrip line.

FIG. 12E is a plan view showing an example of a fifth modification of the microstrip line.

FIG. 12F is a plan view showing an example of a sixth modification of the microstrip line.

FIG. 13 is a graph showing a relationship among an incident wave, a reflected wave, and the amount of a microwave absorbed by an object being heated, which each vary following the temperature rise of the object being heated.

## DESCRIPTION OF EMBODIMENTS

The present inventors have earnestly studied how to detect the state of an object being heated with higher accuracy, and have obtained the following findings.

A microwave generated by a microwave generating unit propagates, as an incident wave, through a waveguide into a heating chamber. One part of the microwave having propagated into the heating chamber is absorbed by an object being heated, while the other part returns, as a reflected wave, from the heating chamber through the waveguide to the microwave generating unit.

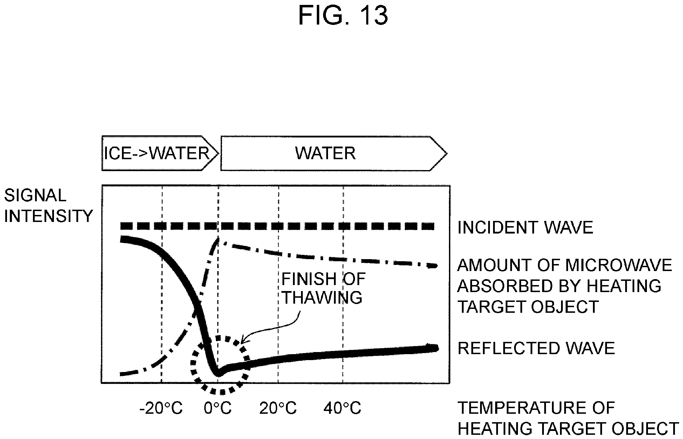

Microwaves are less prone to be absorbed by ice, but prone to be absorbed by water. Specifically, water can absorb approximately 8000 times (based on a dielectric loss factor) more amount of microwaves than ice. Microwaves becomes less prone to be absorbed by water as the temperature of the water rises. For this reason, in cases where the heating target object is frozen food, for example, there exists a relationship, as shown in FIG. 13, between a reflected wave and the amount of a microwave absorbed by the object being heated.

FIG. 13 is a graph showing a relationship among an incident wave, a reflected wave, and the amount of a microwave absorbed by an object being heated, which each vary following the temperature rise of the object being heated. In FIG. 13, the horizontal axis represents the temperature of the object being heated, and the vertical axis represents the signal intensities of the incident wave and the reflected wave. The curves represented by the dotted line, solid line, and dashed-dotted line respectively indicate the incident wave, reflected wave, and the amount of the microwave absorbed by the object being heated. The amount of the microwave absorbed by the object being heated is equal to the difference between the incident wave and the reflected wave.

As shown in FIG. 13, in early stages of the heating, the amount of the microwave absorbed by the object being heated is small and the amount of the reflected wave is large. As the heating progresses and the ice becomes melted, the amount of the microwave absorbed by the object being heated increases rapidly, while that of the reflected wave decreases rapidly. At the point in time when the ice has completely melted, the amount of the microwave absorbed by the object being heated reaches a maximum, while that of the reflected wave reduces down to a minimum.

After that, as the temperature of the water rises, the amount of the microwave absorbed by the object being heated gradually decreases, while that of the reflected wave gradually increases. Therefore, for example, detecting the state of the reflected wave reaching a minimum makes it possible to detect finish of thawing the frozen food.

The present inventors have found that the above relationship holds regardless of the weight and shape of the object being heated, and that it is possible to more accurately detect the state of the object being heated on the basis of changes in the amount of the reflected wave during heating.

The present inventors have found that the amount of the reflected wave is greatly influenced by a standing-wave stabilizing part, and that, when the reflected wave is detected at a position closer to the microwave generating unit than the standing-wave stabilizing part, the above relationship no longer to hold due to the influence of the standing-wave stabilizing part.

On the basis of these findings, the present inventors have created the following inventions.

A microwave heating device according to a first aspect of the present disclosure includes: a heating chamber to accommodate a heating target object, a microwave generating unit to generate a microwave, a waveguide, a standing-wave stabilizing part, and a reflected-wave detection unit. The waveguide transmits, to the heating chamber, the microwave generated by the microwave generating unit. The standing-wave stabilizing part stabilizes the position of an in-tube standing wave that occurs in the inside of the waveguide. The reflected-wave detection unit is disposed closer to the heating chamber than the standing-wave stabilizing part, and detects a part of a reflected wave which is a microwave that returns from the heating chamber to the microwave generating unit.

In the microwave heating device according to a second aspect of the present disclosure, in addition to the first aspect, the standing-wave stabilizing part includes a projection part protruding into the inside of the waveguide.

In the microwave heating device according to a third aspect of the present disclosure, in addition to the first aspect, the waveguide includes a bent portion and the standing-wave stabilizing part includes the bent portion.

In the microwave heating device according to a fourth aspect of the present disclosure, in addition to the first aspect, the reflected-wave detection unit and the standing-wave stabilizing part are disposed and separated from each other in the direction of transmission of the microwave, by a distance equal to an odd multiple of 1/4 of the in-tube wavelength of the in-tube standing wave.

The microwave heating device according to a fifth aspect of the present disclosure further includes, in addition to those in the first aspect, an incident-wave detection unit to detect a part of an incident wave that is a microwave propagating from the microwave generating unit to the heating chamber.

In the microwave heating device according to a sixth aspect of the present disclosure, in addition to the fifth aspect, the incident-wave detection unit and the reflected-wave detection unit share a coupling line that faces an opening disposed in a wall surface of the waveguide. The incident-wave detection unit extracts the incident wave from one end of the coupling line. The reflected-wave detection unit extracts the reflected wave from the other end of the coupling line.

In the microwave heating device according to a seventh aspect of the present disclosure, in addition to the sixth aspect, the opening includes a first elongated hole and a second elongated hole that cross each other and is disposed at a position that fails to intersect a tube axis of the waveguide in a plan view.

The coupling line includes: a first transmission line including a first intersecting-line portion, and a second transmission line including a second intersecting-line portion.

The first intersecting-line portion passes through an opening-cross portion in which the first elongated hole and the second elongated hole cross each other, extends away from the tube axis as approaching a perpendicular line orthogonal to the tube axis, intersects the first elongated hole at a position farther away from the tube axis than the opening-cross portion, and is coupled to one end of the second intersecting-line portion at outside a rectangular region circumscribing the opening in a plan view.

The second intersecting-line portion extends away from the tube axis as approaching the perpendicular line, intersects the second elongated hole at a position farther away from the tube axis than the opening-cross portion, and is coupled to one end of the first intersecting-line portion at outside the rectangular region in a plan view.

The microwave heating device according to an eighth aspect of the present disclosure further includes, in addition to those in the first aspect, a second reflected-wave detection unit that is disposed closer to the microwave generating unit than the standing-wave stabilizing part and that detects a part of the reflected wave.

Hereinafter, microwave heating devices according to an embodiment of the present disclosure will be described with reference to the drawings.

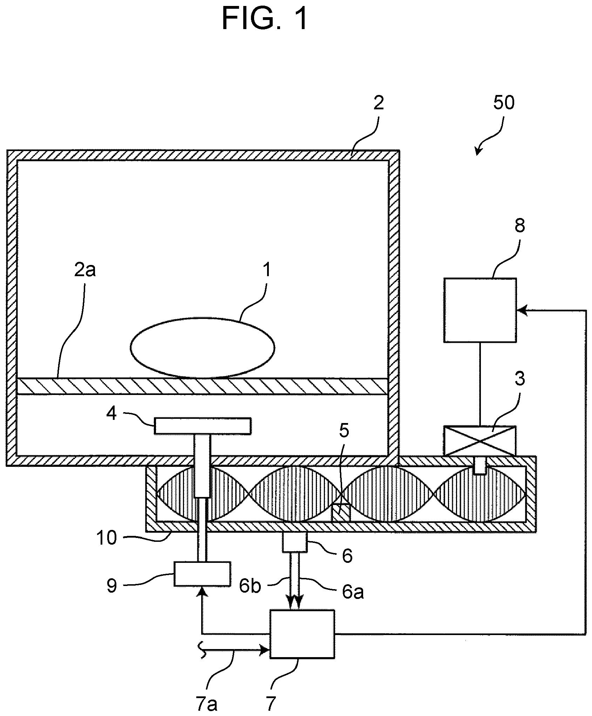

FIG. 1 is a schematic diagram for illustrating microwave heating device 50 according to the embodiment of the present disclosure. As shown in FIG. 1, microwave heating device 50 includes heating chamber 2 to accommodate heating target object 1, magnetron 3, and waveguide 10. Magnetron 3 is an example of a microwave generating unit that generates microwaves. Waveguide 10 causes the microwaves generated by magnetron 3 to propagate to heating chamber 2.

Heating target object 1 is frozen food, for example. Heating chamber 2 is configured with a rectangular parallelepiped casing, for example. Heating chamber 2 is provided with loading stand 2a on which heating target object 1 is placed. Loading stand 2a is configured including a material, such as glass or ceramic, through which microwaves can be easily transmitted.

Waveguide 10 is a square waveguide having a cross section formed in a rectangular shape. Microwave emitting part 4 is disposed below loading stand 2a. The microwave having propagated through waveguide 10 is emitted into the inside of heating chamber 2 by microwave emitting part 4.

The microwave produces an in-tube standing wave inside waveguide 10. FIG. 1 schematically illustrates the in-tube standing wave produced in the inside of waveguide 10. In-tube wavelength $\lambda$g in waveguide 10 is determined from the oscillation frequency of the magnetron 3 and the shape of waveguide 10.

The in-tube standing wave has a node and antinode that repeatedly appears every 1/2 of in-tube wavelength $\lambda$g, in the longitudinal direction of waveguide 10. A node always appears at a terminal end, in the transmission direction of the microwave, of the waveguide 10. An antinode always appears at a portion from which magnetron 3 emits the microwave.

Waveguide 10 is provided with standing-wave stabilizing part 5 for stabilizing the position of an in-tube standing wave occurring inside waveguide 10. In accordance with the present embodiment, standing-wave stabilizing part 5 is a projection part that is configured to protrude toward the inside of waveguide 10 and thereby to make waveguide 10 locally narrower.

In the inside of waveguide 10, standing-wave stabilizing part 5 matches the impedance in the vicinity of magnetron 3 to the impedance in the vicinity of heating chamber 2. Standing-wave stabilizing part 5 is disposed away from the waveguide 10's terminal end that is positioned in the transmission direction of the microwave, by a distance equal to an integral multiple of 1/2 of in-tube wavelength λg. With this configuration, standing-wave stabilizing part 5 fixes a node of the in-tube standing wave in the vicinity of standing-wave stabilizing part 5.

On a wall surface (Wide Plane) of waveguide 10, directional coupler 6 is disposed which has both the function of an incident-wave detection unit and the function of a reflected-wave detection unit. The incident-wave detection unit detects a part of an incident wave which is a microwave propagating from magnetron 3 to heating chamber 2. The reflected-wave detection unit detects a part of a reflected wave which is a microwave returning from heating chamber 2 to magnetron 3.

Directional coupler 6 is disposed closer to heating chamber 2 than standing-wave stabilizing part 5. Specifically, directional coupler 6 and standing-wave stabilizing part 5 are disposed and separated from each other in the transmission direction (left-right direction in FIG. 1) of the microwave, by a distance equal to an odd multiple (1-fold in the present embodiment) of 1/4 of in-tube wavelength λg of the in-tube standing wave. Directional coupler 6 is disposed between standing-wave stabilizing part 5 and microwave emitting part 4.

Directional coupler 6 individually detects detection signal 6a and detection signal 6b in accordance with the incident wave and the reflected wave, respectively, and transmits detection signal 6a and detection signal 6b to controller 7. The specific configuration of directional coupler 6 will be described later in detail.

Controller 7 receives signal 7a in addition to detection signals 6a and 6b. Signal 7a includes signals regarding: a heating condition that is set by means of an input unit (not shown) of microwave heating device 50, and the weight and vapor amount of heating target object 1 that are detected with sensors (not shown).

Controller 7 controls drive power supply 8 and motor 9, in accordance with signal 7a and detection signals 6a and 6b. Drive power supply 8 supplies, to magnetron 3, electric power for generating microwaves. Motor 9 rotates microwave emitting part 4. In this way, microwave heating device 50 heats heating target object 1 accommodated in heating chamber 2, by means of the microwave supplied to heating chamber 2.

In the present embodiment, directional coupler 6 is disposed closer to heating chamber 2 than standing-wave stabilizing part 5. With this configuration, the influence of standing-wave stabilizing part 5 on directional coupler 6 is reduced. This allows more accurate detection of the state of object 1 being heated. As a result, for example, it is possible to accurately grasp the thawing state of frozen food. By controlling the amount of heating in accordance with the state, it is also possible to shorten the thawing time.

In the present embodiment, directional coupler 6 and standing-wave stabilizing part 5 are disposed and separated from each other in the transmission direction of the microwave, by a distance equal to an odd multiple of 1/4 of in-tube wavelength λg. With this configuration, it is possible to dispose directional coupler 6 in the vicinity of an antinode. This makes it possible to increase the amount of the reflected wave that directional coupler 6 receives, resulting in improved accuracy of the detection of the reflected wave. As a result, the state of object 1 being heated can be detected more accurately.

The positions of directional coupler 6 and standing-wave stabilizing part 5 in the width direction (depth direction in FIG. 1) of waveguide 10 are not particularly limited. It is sufficient for directional coupler 6 and standing-wave stabilizing part 5 to be disposed and separated from each other by a distance approximately equal to an odd multiple of 1/4 of in-tube wavelength λg.

In cases either where the temperature of heating target object 1 is high at the start of heating or where the weight of heating target object 1 is heavy, the amount of the reflected wave varies not so much. For this reason, there are cases where it is difficult to judge the state of the reflected wave reducing down to a minimum.

In the present embodiment, directional coupler 6 has both the function of the incident-wave detection unit and the function of the reflected-wave detection unit. With this configuration, on the basis of the incident wave and reflected wave detected by directional coupler 6, the amount of the microwave absorbed by object 1 being heated can be estimated more accurately. For example, by detecting a change in reflectance obtained by dividing the amount of the reflected wave by the amount of the incident wave, it becomes easy to judge the state of the reflected wave reducing down to a minimum. As a result, the state of object 1 being heated can be detected more accurately.

In the present embodiment, directional coupler 6 has both the function of the incident-wave detection unit and the function of the reflected-wave detection unit. However, the present disclosure is not limited to this. The incident-wave detection unit and the reflected-wave detection unit may be disposed separately. The incident-wave detection unit may be disposed closer to magnetron 3 than standing-wave stabilizing part 5.

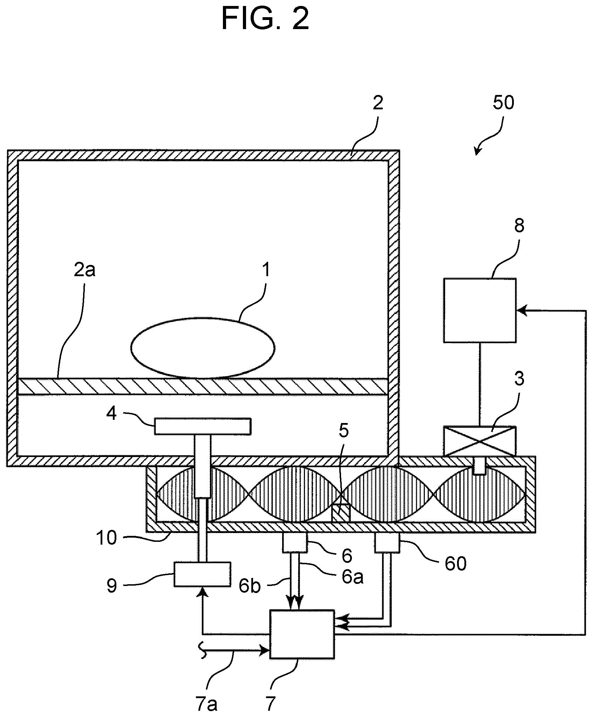

In the present embodiment, one directional coupler 6 is disposed closer to heating chamber 2 than standing-wave stabilizing part 5. However, the present disclosure is not limited to this. FIG. 2 is a schematic diagram for illustrating an example of a first modification of microwave heating device 50. As in the case of FIG. 1, FIG. 2 also schematically illustrates an in-tube standing wave occurring in the inside of waveguide 10.

As shown in FIG. 2, microwave heating device 50 according to the example of the first modification further includes, in addition to directional coupler 6, directional coupler 60 having the same configuration as that of directional coupler 6. That is, directional coupler 60 includes a second reflected-wave detection unit that has the same configuration as that of the reflected-wave detection unit provided in directional coupler 6. Directional coupler 60 is disposed closer to magnetron 3 than standing-wave stabilizing unit 5.

In this configuration, the second reflected-wave detection unit as well can detect a part of the reflected wave that passes through standing-wave stabilizing part 5 and returns to magnetron 3. With this configuration, for example, in cases where the amount of the reflected wave is excessively large, it is possible to halt magnetron 3 and thereby to prevent magnetron 3 from being broken.

In the present embodiment, standing-wave stabilizing part 5 is configured with the projection part that protrudes toward the inside of waveguide 10. However, standing-wave stabilizing part 5 is not limited to the present embodiment, as long as it can stabilize the position of the in-tube standing wave by locally narrowing waveguide 10 and thereby disturbing the propagation of the microwave.

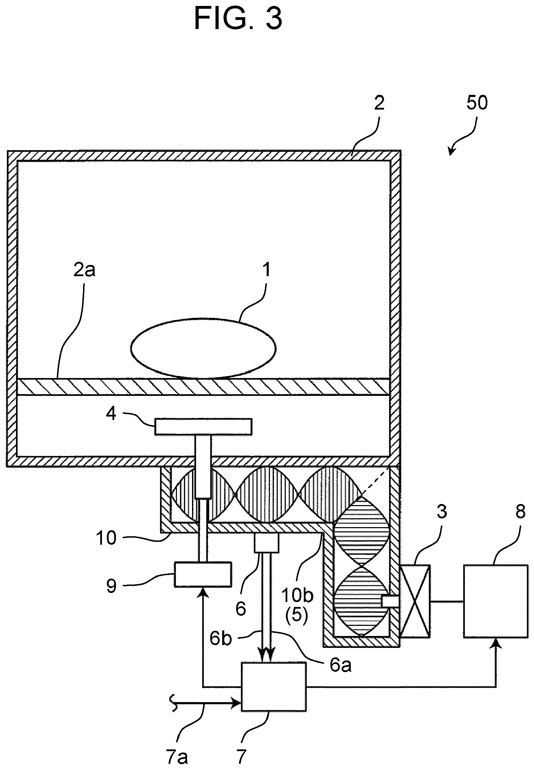

FIG. 3 is a schematic diagram for illustrating an example of a second modification of microwave heating device 50. As in the cases of FIGS. 1 and 2, FIG. 3 also schematically illustrates an in-tube standing wave occurring in the inside of waveguide 10. As shown in FIG. 3, waveguide 10 includes bent portion 10b bent in an L-shape.

In this case, the cross-sectional area of bent portion 10b indicated by the dotted line in FIG. 3 is larger than the cross-sectional area of the other portion of waveguide 10. For this reason, a node of the in-tube standing wave is prone to be fixed at the center (center of the dotted line in FIG. 3) of bent portion 10b. In the example of the second modification, bent portion 10b constitutes standing-wave stabilizing part 5.

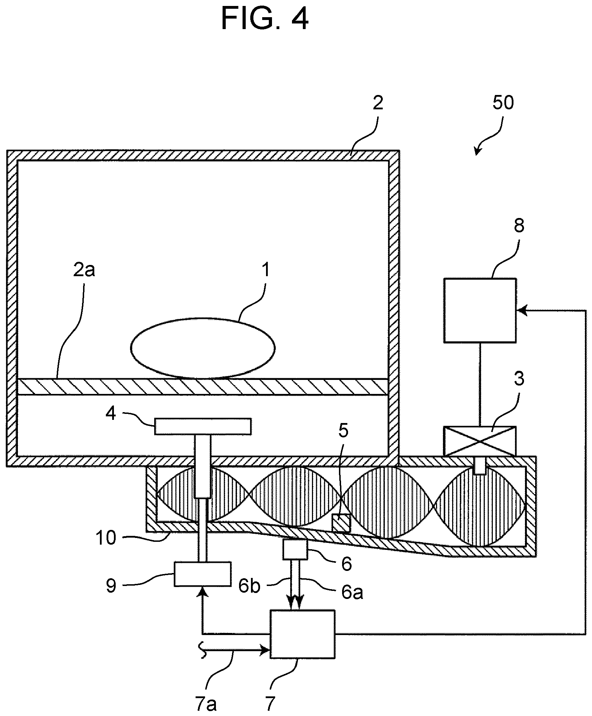

Waveguide 10 shown in FIG. 1 is a square waveguide that has a uniform cross-sectional area, except for the portion where standing-wave stabilizing part 5 is disposed. However, the present disclosure is not limited to this. FIG. 4 is a schematic diagram for illustrating an example of a third modification of microwave heating device 50. As in the cases of FIGS. 1 to 3, FIG. 4 also schematically illustrates an in-tube standing wave occurring in the inside of waveguide 10.

As shown in FIG. 4, in the example of the third modification, waveguide 10 is a square waveguide whose cross-sectional area gradually decreases at greater distances away from magnetron 3 toward heating chamber 2. Waveguide 10 does not include any locally narrowed section other than the portion provided with standing-wave stabilizing part 5. Therefore, waveguide 10 according to the example of the third modification can achieve the same advantages as those of waveguide 10 shown in FIG. 1.

Standing-wave stabilizing part 5 shown in FIG. 1 is configured with one constituent element. However, standing-wave stabilizing part 5 may be configured with a plurality of constituent elements. In this case, it is sufficient for directional coupler 6 to be disposed closer to heating chamber 2 than the constituent element that is the closest, of the constituent elements of standing-wave stabilizing part 5, to heating chamber 2.

In the present embodiment, motor 9 rotates microwave emitting part 4. However, the present disclosure is not limited to this. For example, microwave emitting part 4 may be an opening formed so as to emit the microwave having propagated through waveguide 10 into heating chamber 2, as a circularly polarized microwave.

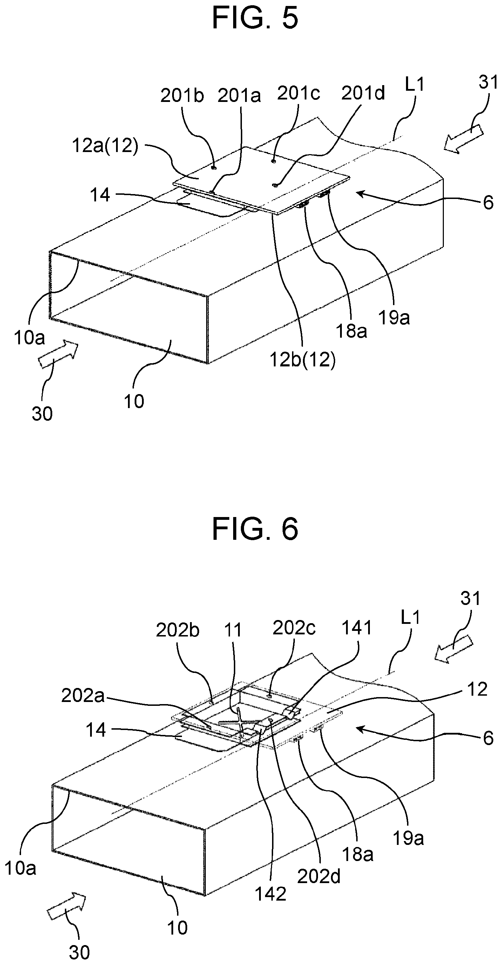

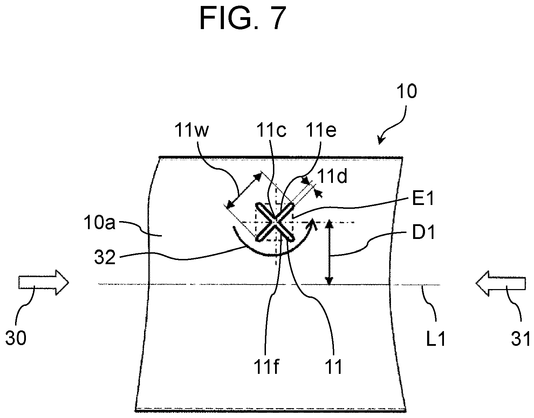

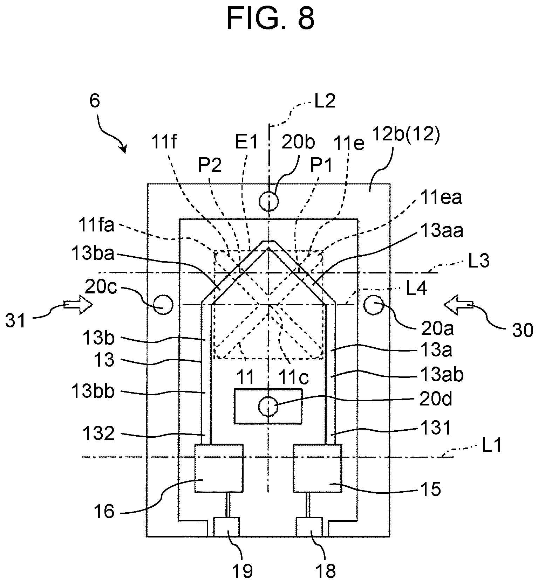

Next, the configuration of directional coupler 6 is described. FIG. 5 is a perspective view of directional coupler 6. FIG. 6 is a perspective view of directional coupler 6 in the state in which printed circuit board 12 has been removed. FIG. 7 is a plan view of waveguide 10. FIG. 8 is a circuit configuration diagram of printed circuit board 12 mounted on directional coupler 6.

In FIGS. 1 to 4, directional coupler 6 is illustrated as being disposed on the bottom wall of waveguide 10. However, in FIGS. 5 and 6, directional coupler 6 is illustrated as being disposed on the upper wall of waveguide 10 for easy understanding. In the present embodiment, the cross section orthogonal to tube axis L1 of waveguide 10 has a rectangular shape. Tube axis L1 is the center axis of waveguide 10, in the direction of the width.

Directional coupler 6 includes cross opening 11, printed circuit board 12, and support part 14. Cross opening 11 is an X-shaped opening disposed in wide plane 10a of waveguide 10. Printed circuit board 12 is disposed outside waveguide 10 so as to face cross opening 11. Support part 14 supports printed circuit board 12 on an outer surface of waveguide 10.

As shown in FIG. 7, cross opening 11 is disposed at a position failing to intersect tube axis L1 of waveguide 10, in a plan view. Opening-center portion 11c of cross opening 11 is disposed away from tube axis L1 of waveguide 10 by dimension D1 in a plan view. Dimension D1 is, for example, 1/4 of the width of waveguide 10. Cross opening 11 emits microwaves propagating through waveguide 10, as circularly polarized microwaves, toward printed circuit board 12.

The opening shape of cross opening 11 is determined in accordance with conditions including: the width and height of waveguide 10, the power levels and frequency bands of microwaves propagating through waveguide 10, and the power levels of circularly polarized microwaves emitted from cross opening 11.

For example, in the case where the width and height of waveguide 10 are respectively 100 mm and 30 mm, the wall thickness of waveguide 10 is 0.6 mm, the maximum power level of the microwave propagating through waveguide 10 is 1000 W, the frequency band is 2450 MHz, and the maximum power level of the circularly polarized microwave emitted from cross opening 11 is approximately 10 mW, length 11w and width 11d of cross opening 11 are set to 20 mm and 2 mm, respectively.

As shown in FIG. 8, cross opening 11 includes: first elongated hole 11e, and second elongated hole 11f which cross each other. Opening-center portion 11c of cross opening 11 coincides with an opening-cross portion where first elongated hole 11e crosses second elongated hole 11f. Cross opening 11 is formed to have line symmetry with respect to perpendicular line L2. Perpendicular line L2 is orthogonal to tube axis L1, and passes through opening-center portion 11c.

In the embodiment, first elongated hole 11e and second elongated hole 11f cross each other at an angle of 90 degrees. However, the present disclosure is not limited to this. First elongated hole 11e and second elongated hole 11f may cross each other at an angle of either 60 degrees or 120 degrees.

In the case where opening-center portion 11c of cross opening 11 is disposed at a position at which it is superposed on tube axis L1 in a plan view, the electric field reciprocates along the transmission direction of the microwave, without rotating. In this case, cross opening 11 emits a linearly polarized microwave.

In the case where opening-center portion 11c is even slightly out of tube axis L1, the electric field will rotate. However, in the case where opening-center portion 11c is close to tube axis L1 (as dimension D1 is closer to 0 [zero] mm), a distorted rotating electric field is generated. In this case, cross opening 11 emits an elliptically polarized microwave.

According to the embodiment, dimension D1 is set equal to approximately 1/4 of the width of waveguide 10. In this case, an substantially-perfect circular rotating electric field is generated. Cross opening 11 emits an substantially-perfect circularly polarized microwave. This allows the rotation direction of the circularly polarized microwave to be more distinct. As a result, the incident wave and the reflected wave can be separately detected with high accuracy.

Printed circuit board 12 has board rear surface 12b facing cross opening 11, and board front surface 12a opposite to board rear surface 12b. Board front surface 12a includes a copper foil (not shown), an example of a microwave reflecting member, that is formed to cover the whole of board front surface 12a. It is the copper foil that prevents the circularly polarized microwaves emitted from cross opening 11 from passing through printed circuit board 12.

As shown in FIG. 8, microstrip line 13, an example of a coupling line, is disposed on board rear surface 12b. Microstrip line 13 is configured with a transmission line with a characteristic impedance of approximately 50 $\Omega$, for example. Microstrip line 13 is disposed so as to surround opening-center portion 11c of cross opening 11.

Hereinafter, effective length $\lambda_{re}$ of microstrip line 13 will be described. Effective length $\lambda_{re}$ of microstrip line 13 is expressed as the following equation, where "w" is the width of microstrip line 13, "h" is the thickness of printed circuit board 12, "c" is the velocity of light, "f" is the frequency of an electromagnetic wave, and "$\varepsilon_r$" is the relative permittivity of the printed circuit board. Effective length $\lambda_{re}$ equals the wavelength of an electromagnetic wave propagating through microstrip line 13.

[Equation 1]

$$\lambda_{re} = \frac{c}{f \cdot \sqrt{\varepsilon_{re}}}$$

$$\varepsilon_{re} = \frac{\varepsilon_r + 1}{2} + \frac{\varepsilon_r - 1}{2} \cdot \frac{1}{\sqrt{(1 + 10h/w)}}$$

Specifically, microstrip line 13 includes: first transmission line 13a, and second transmission line 13b. First transmission line 13a has first straight-line portion 13aa which is an example of a first intersecting-line portion. First straight-line portion 13aa intersects first elongated hole 11e at a position farther away from tube axis L1 than opening-center portion 11c, in a plan view. First straight-line portion 13aa extends away from tube axis L1 as approaching perpendicular line L2.

Second transmission line 13b has second straight-line portion 13ba which is an example of a second intersecting-line portion. Second straight-line portion 13ba intersects second elongated hole 11f at a position farther away from tube axis L1 than opening-center portion 11c, in a plan view. Second straight-line portion 13ba extends away from tube axis L1 as approaching perpendicular line L2. First straight-line portion 13aa and second straight-line portion 13ba are disposed to have line symmetry with respect to perpendicular line L2.

First transmission line 13a and second transmission line 13b are coupled to each other at a position that is outside rectangular region E1 and is farther away from tube axis L1 than rectangular region E1, in a plan view. First straight-line portion 13aa intersects first elongated hole 11e at a position that is closer to opening-end portion 11ea than opening-center portion 11c, in a plan view.

First straight-line portion 13aa intersects first elongated hole 11e at right angles, in a plan view. Second straight-line portion 13ba intersects second elongated hole 11f at a position that is closer to opening-end portion 11fa than opening-center portion 11c, in a plan view. Second straight-line portion 13ba intersects second elongated hole 11f at right angles, in a plan view.

One end of first transmission line 13a and one end of second transmission line 13b are coupled to each other at outside the region that is superposed on cross opening 11, in a plan view. One end of first straight-line portion 13aa is coupled to one end of second straight-line portion 13ba at outside rectangular region E1 that circumscribes cross opening 11.

First coupling point P1 is a point where first straight-line portion 13aa and first elongated hole 11e intersect each other in a plan view. Second coupling point P2 is a point where second straight-line portion 13ba and second elongated hole 11f intersect each other in a plan view. A straight line that connects first coupling point P1 and second coupling point P2 is defined as virtual straight line L3. In the present embodiment, the sum of a line distance of first transmission line 13a further away from tube axis L1 than virtual straight line L3 and a line distance of second transmission line 13b further away from tube axis L1 than virtual straight line L3, is set equal to 1/4 of effective length $\lambda_{re}$.

In a plan view, a line that passes through opening-center portion 11c and is parallel to tube axis L1 is defined as parallel line L4. In the present embodiment, the sum of a line distance of first transmission line 13a further away from tube axis L1 than parallel line L4 and a line distance of second transmission line 13b further away from tube axis L1 than parallel line L4, is set equal to 1/2 of effective length $\lambda_{re}$.

First transmission line 13a includes third straight-line portion 13ab that couples the other end of first straight-line portion 13aa to first output part 131. First straight-line portion 13aa and third straight-line portion 13ab are coupled to each other so as to make an obtuse angle (e.g. 135 degrees).

Second transmission line 13b includes fourth straight-line portion 13bb that couples the other end of second straight-line portion 13ba to second output part 132. Second straight-line portion 13ba and fourth straight-line portion 13bb are coupled to each other so as to make an obtuse angle (e.g. 135 degrees). Third straight-line portion 13ab and fourth straight-line portion 13bb are disposed in parallel with perpendicular line L2.

First output part 131 and second output part 132 are disposed outside support part 14 (see FIGS. 5 and 6) in a plan view. To first output part 131, first detector circuit 15 is coupled. First detector circuit 15 detects the level of a microwave signal, and outputs the detected level of the microwave signal as a control signal. To second output part 132, second detector circuit 16 is coupled. Second detector circuit 16 detects the level of a microwave signal, and outputs the detected level of the microwave signal as a control signal.

In the present embodiment, each of first detector circuit 15 and second detector circuit 16 includes a smoothing circuit (not shown) that is configured including a chip resistor and a Schottky diode. First detector circuit 15 rectifies a microwave signal fed from first output part 131, and converts the rectified microwave signal into a direct-current voltage. The thus-converted direct-current voltage is fed to first detection output unit 18. First detection output unit 18 transmits, to controller 7, detection signal 6a corresponding to the incident wave (see FIG. 1).

Likewise, second detector circuit 16 rectifies a microwave signal fed from second output part 132, and converts the rectified microwave signal into a direct-current voltage. The thus-converted direct-current voltage is fed to second detection output part 19. Second detection output part 19 transmits, to controller 7, detection signal 6b corresponding to the reflected wave (see FIG. 1).

Printed circuit board 12 includes four holes (holes 20a, 20b, 20c, and 20d) for attaching printed circuit board 12 to waveguide 10. On board rear surface 12b, copper foils each for serving as a ground are formed at portions around holes 20a, 20b, 20c, and 20d. The portions on which the copper foils are formed have the same voltage as that of board front surface 12a.

Printed circuit board 12 is fixed to waveguide 10, with screws 201a, 201b, 201c, and 201d (see FIG. 5) being screwed through respective holes 20a, 20b, 20c, and 20d into support part 14.

As shown in FIG. 6, support part 14 is provided with screw portions 202a, 202b, 202c, and 202d into which screws 201a, 201b, 201c, and 201d are screwed, respectively. Screw portions 202a, 202b, 202c, and 202d are formed in a flange part disposed in support part 14.

Support part 14 has conductivity, and is disposed so as to surround cross opening 11 in a plan view. Support part 14 functions as a shield that prevents circularly polarized microwaves emitted from cross opening 11 from leaking out of support part 14.

Support part 14 is provided with groove 141 and groove 142 through which third straight-line portion 13ab and fourth straight-line portion 13bb of microstrip line 13 pass, respectively. With this configuration, both first output part 131 and second output part 132 of microstrip line 13 are allowed to be disposed outside support part 14. Grooves 141 and 142 function as extraction parts for extracting the microwave signals that propagate through microstrip line 13 to the outside of support part 14. Grooves 141 and 142 can be formed by recessing the flange part of support part 14 so as to be away from printed circuit board 12.

In FIGS. 5 and 6, illustrated are connector 18a and connector 19a that are respectively coupled to first detection output part 18 and second detection output part 19 shown in FIG. 8.

In the present embodiment, directional coupler 6 has both the function of an incident-wave detection unit and the function of a reflected-wave detection unit. However, the present disclosure is not limited to this. Directional coupler 6 may be configured to have only any one of the function of an incident-wave detection unit and the function of a reflected-wave detection unit. In this case, directional coupler 6 is configured by replacing one of first detector circuit 15 and second detector circuit 16 shown in FIG. 8 with a termination circuit (for example, a chip resistor of 50 Ω).

Next, the operation and action of directional coupler 6 will be described.

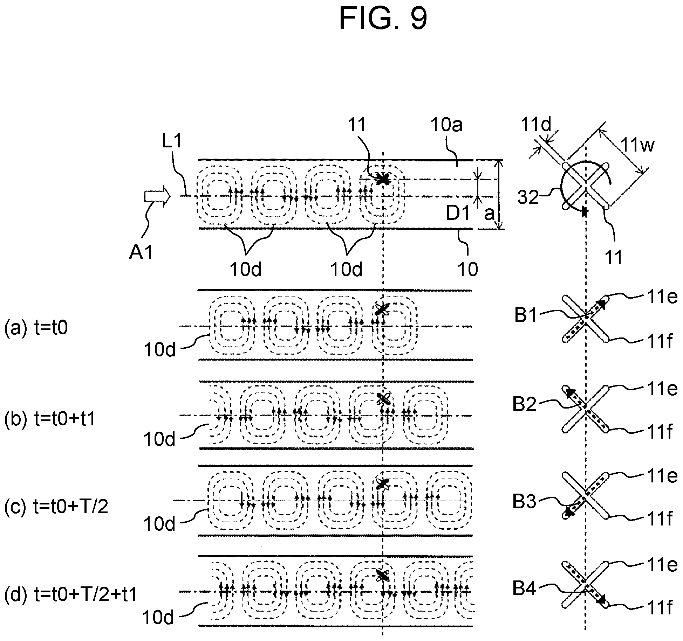

First, with reference to FIG. 9, a description will be made regarding the principle that a circularly polarized microwave is emitted from cross opening 11. In FIG. 9, magnetic field distribution 10d that appears inside waveguide 10 is illustrated by concentric ellipses depicted with the dotted lines. The directions of magnetic fields in magnetic field distribution 10d are indicated by the arrows. Magnetic field distribution 10d travels through inside waveguide 10 in transmission direction A1 of the microwave with a lapse of time.

At time t = t0 shown in (a) of FIG. 9 magnetic field distribution 10d is formed. At this time, the magnetic field indicated by broken line arrow B1 excites first elongated hole 11e of cross opening 11. At time t = t0 + t1 shown in (b) of FIG. 9, the magnetic field indicated by broken line arrow B2 excites second elongated hole 11f of cross opening 11.

At time t = t0 + T/2 (where T is the period of in-tube wavelength λg of the microwave) shown in (c) of FIG. 9, the magnetic field indicated by broken line arrow B3 excites first elongated hole 11e of cross opening 11. At time t = t0 + T/2 + t1 shown in (d) of FIG. 9, the magnetic field indicated by broken line arrow B4 excites second elongated hole 11f of cross opening 11. At time t = t0 + T, as in the case at t = t0, the magnetic field indicated by broken line arrow B1 excites first elongated hole 11e of cross opening 11.

By repeating these states sequentially, a circularly polarized microwave that rotates counterclockwise (in rotation direction 32 of the microwave) is emitted from cross opening 11 to the outside of waveguide 10.

Here, assuming that the microwave propagating along arrow 30 shown in FIG. 7 is an incident wave and that the microwave propagating along arrow 31 is a reflected wave, the incident wave then travels in the same direction as transmission direction A1 shown in FIG. 9. This causes, as described above, the circularly polarized microwave that rotates counterclockwise to be emitted from cross opening 11 to the outside of waveguide 10.

On the other hand, the reflected wave propagates in the direction opposite to transmission direction A1 shown in FIG. 9. This causes the circularly polarized microwave that rotates clockwise to be emitted from cross opening 11 to the outside of waveguide 10.

The circularly polarized microwave emitted to the outside of the waveguide 10 is coupled to microstrip line 13 that faces cross opening 11. Microstrip line 13 outputs, to first output prat 131, most of the microwave that is fed by the incident wave propagating along arrow 30 and is emitted from cross opening 11.

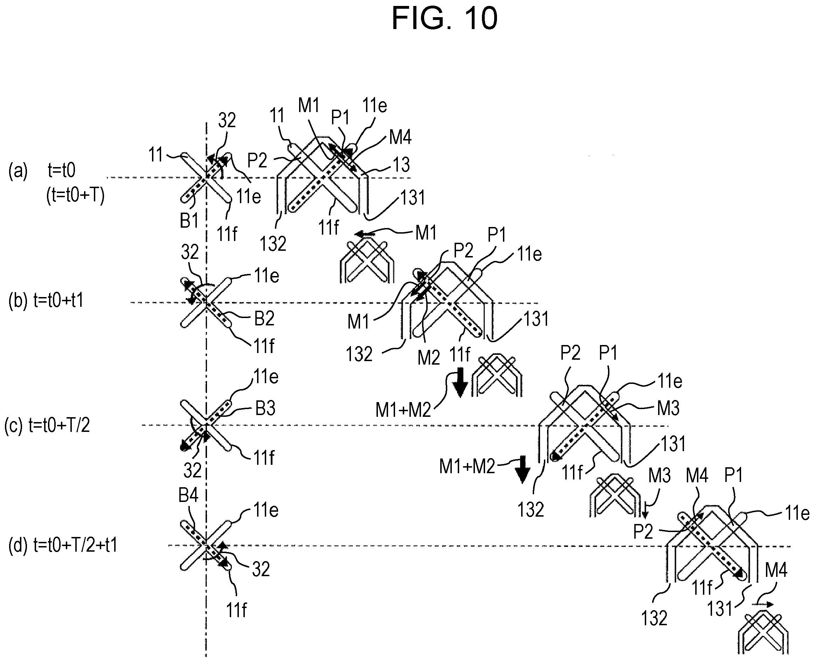

On the other hand, microstrip line 13 outputs, to second output prat 132, most of the microwave that is fed by the reflected wave that propagates along arrow 31 and is emitted from cross opening 11. This allows the incident wave and the reflected wave to be separately detected with higher accuracy. Regarding this, a more detailed description is made with reference to FIG. 10.

FIG. 10 is a diagram for illustrating the direction and amount of a microwave that propagates through microstrip line 13 and varies with a lapse of time. There is a gap between microstrip line 13 and cross opening 11. In general, the time required for a microwave to arrive at microstrip line 13 is delayed by the time during which the microwave propagates across the gap. However, for convenience, it is assumed that there is no time delay here.

Here, regions at each of which cross opening 11 intersects microstrip line 13 in a plan view are referred to as coupling regions. First coupling point P1 locates at an approximate center of the coupling region in which first elongated hole 11e intersects microstrip line 13. Second coupling point P2 locates at an approximate center of the coupling region in which second elongated hole 11f intersects microstrip line 13.

In FIG. 10, the amount (observed as an electric current that flows due to interlinkage of a magnetic field) of the microwave propagating through microstrip line 13 is represented by the thickness of the solid line arrow. That is, when the amount of the microwave propagating through microstrip line 13 is large, it is indicated by the thick arrow; when the amount of the microwave propagating through microstrip line 13 is small, it is indicated by the thin arrow.

At time t = t0 shown in (a) of FIG. 10, the magnetic field indicated by broken line arrow B1 excites first elongated hole 11e of cross opening 11, and a microwave indicated by thick solid line arrow M1 is generated at first coupling point P1. The microwave propagates through microstrip line 13 toward second coupling point P2.

At time t = t0 + t1 shown in (b) of FIG. 10, the magnetic field indicated by broken line arrow B2 excites second elongated hole 11f of cross opening 11, and a microwave indicated by thick solid line arrow M2 is generated at second coupling point P2.

In the case where the effective propagation time of the microwave between first coupling point P1 and second coupling point P2 through microstrip line 13 is set to time t1, the microwave generated at first coupling point P1 at the time shown in (a) of FIG. 10 propagates to second coupling point P2 at the time shown in (b) of FIG. 10. That is, at the time shown in (b) of FIG. 10, both the microwave indicated by solid line arrow M1 and the microwave indicated by solid line arrow M2 occur at second coupling point P2.

Accordingly, the two microwaves are added and propagate through microstrip line 13 toward second output part 132, and are then fed to second output part 132 after a lapse of a predetermined time. In the present embodiment, in order to set the effective propagation time described above equal to time t1, the sum of a line distance of first transmission line 13a further away from tube axis L1 than virtual straight line L3 and a line distance of second transmission line 13b further away from tube axis L1 than virtual straight line L3, is set equal to 1/4 of effective length $\lambda_{re}$. This configuration allows easy designing of microstrip line 13.

At time t = t0 + T/2 shown in (c) of FIG. 10, the magnetic field indicated by broken line arrow B3 excites first elongated hole 11e of cross opening 11, and a microwave indicated by thin solid line arrow M3 is generated at first coupling point P1. The microwave propagates through microstrip line 13 toward first output part 131, and is fed to first output part 131 after a lapse of a predetermined time.

The reason why the thickness of solid line arrow M3 is made thinner than that of solid line arrow M1 is as follows: From cross opening 11, a circularly polarized microwave that rotates counterclockwise (in rotation direction 32 of the microwave) is emitted as described above.

At the time shown in (a) of FIG. 10, the microwave generated at first coupling point P1 indicated by solid line arrow M1 propagates in a direction substantially the same as the rotation direction of the microwave emitted from cross opening 11. For this reason, the energy of the microwave indicated by solid line arrow M1 is not reduced.

In contrast, at the time shown in (c) of FIG. 10, the microwave generated at first coupling point P1 indicated by solid line arrow M3 propagates in a direction substantially opposite to the rotation direction of the microwave emitted from cross opening 11. For this reason, the energy of the combined microwave is reduced. Accordingly, the amount of the microwave indicated by solid line arrow M3 is smaller than the amount of the microwave indicated by solid line arrow M1.

At time t = t0 + T/2 + t1 shown in (d) of FIG. 10, the magnetic field indicated by broken line arrow B4 excites second elongated hole 11f of cross opening 11, and a microwave indicated by thin solid line arrow M4 is generated at second coupling point P2. The microwave propagates toward first coupling point P1. The reason why the thickness of solid arrow M4 is made thin is the same as the reason why the thickness of solid arrow M3 is made thin as described above.

At time t = t0 + T, as in the case at time t = t0 shown in (a) of FIG. 10, the magnetic field indicated by broken line arrow B1 excites first elongated hole 11e of cross opening 11. In this case, although having not been described in the case at the time shown in (a) of FIG. 10, there exists a microwave indicated by thin solid line arrow M4 on microstrip line 13.

The microwave indicated by thin solid arrow M4 propagates to first coupling point P1 at time t = t0 + T (that is, t = t0). The microwave indicated by thin solid arrow M4 propagates in the direction opposite to the microwave indicated by thick solid arrow M1. Therefore, the microwave indicated by solid arrow M4 is canceled and disappears, and is not fed to first output part 131.

Strictly speaking, the amount of the microwave propagating from first coupling point P1 at time t = t0 is equal to the amount (M1 - M4) that is obtained by subtracting the amount of the microwave indicated by thin solid arrow M4 from the amount of the microwave indicated by thick solid arrow M1. Accordingly, the amount of the microwave fed to second output part 132 is equal to the amount (M1 + M2 - M4) that is obtained by adding the amount of the microwave indicated by thick solid arrow M2 to the amount of the microwave propagating from second coupling point P2.

In consideration of this, the amount (M1 + M2 - M4) of the microwave fed to second output part 132 is much larger than the amount (M3) of the microwave fed to first output part 131. Therefore, microstrip line 13 outputs, to second output prat 132, most of the microwave rotating counterclockwise that is fed by the reflected wave propagating along arrow 31 and is emitted from cross opening 11. On the other hand, microstrip line 13 outputs, to first output prat 131, most of the microwave rotating clockwise that is fed by the incident wave propagating along arrow 30 and is emitted from cross opening 11.

The amount of the microwave emitted from cross opening 11 with respect to the amount of the microwave propagating through waveguide 10 is determined by the shapes and dimensions of waveguide 10 and cross opening 11. For example, in the case where the shapes and dimensions are set to ones described above, the amount of the microwave emitted from cross opening 11 is approximately 1/100000 (approximately -50 dB) times the amount of the microwave propagating through waveguide 10.

Next, a description will be made regarding the reason why, in the present embodiment, the sum of a line distance of first transmission line 13a further away from tube axis L1 than parallel line L4 and a line distance of second transmission line 13b further away from tube axis L1 than parallel line L4, is set equal to 1/2 of effective length $\lambda_{re}$.

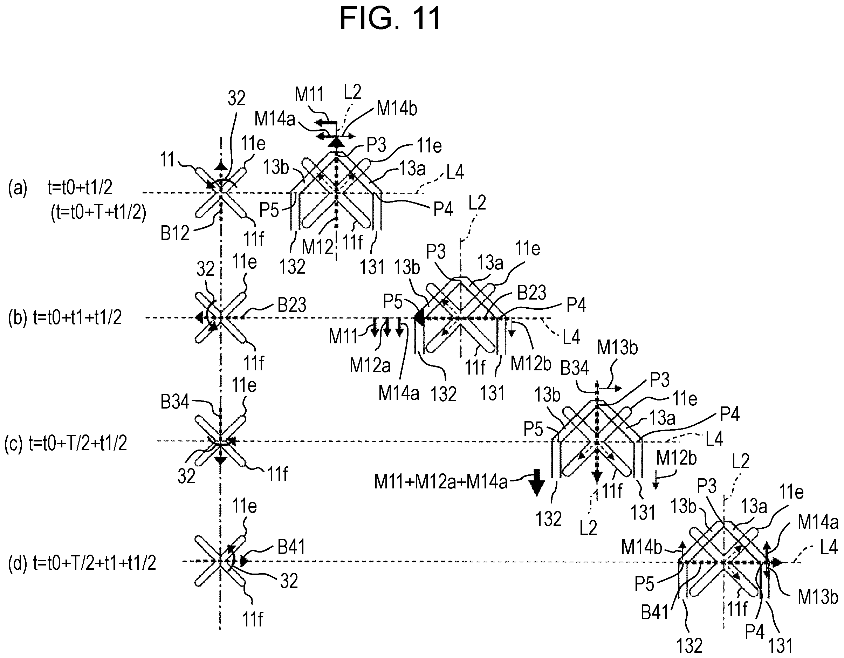

FIG. 11 is a diagram for illustrating the direction and amount of a microwave that propagates through microstrip line 13 and varies with a lapse of time. In (a) to (d) of FIG. 11, the states of (a) to (d) of FIG. 10 after a lapse of time t1/2 are respectively illustrated.

Although the description is omitted above, magnetic field distribution 10d travels through inside waveguide 10 in transmission direction A1 of the microwave with a lapse of time. Therefore, as shown in (a) to (d) of FIG. 11, the magnetic fields indicated by broken line arrows B12, B23, B34, and B41 excite first elongated hole 11e and second elongated hole 11f. This causes circularly polarized microwaves emitted to the outside of waveguide 10 to be coupled to microstrip line 13.

Here, in a plan view, a region in which perpendicular line L2 and parallel line L4 intersect microstrip line 13 is referred to as a coupling region. Third coupling point P3 locates at an approximate center of the coupling region in which perpendicular line L2 intersects microstrip line 13. Fourth coupling point P4 locates at an approximate center of the coupling region in which parallel line L4 intersects first transmission line 13a. Fifth coupling point P5 locates at an approximate center of the coupling region in which parallel line L4 intersects second transmission line 13b.

At time t = t0 + t1/2 shown in (a) of FIG. 11, the magnetic field indicated by broken line arrow B12 excites cross opening 11, and a microwave indicated by thick solid line arrow M11 is generated at third coupling point P3. The microwave propagates through microstrip line 13 toward fifth coupling point P5.

At time t = t0 + t1 + t1/2 shown in (b) of FIG. 11, the magnetic field indicated by broken line arrow B23 excites cross opening 11. At fifth coupling point P5, a microwave indicated by thick solid line arrow M12a is generated. At fourth coupling point P4, a microwave indicated by thin solid line arrow M12b is generated. The reason why solid line arrow M12b is made thin is the same as the reason why solid line arrow M3 is made thin as described above.

In the case where the effective propagation time of the microwave between third coupling point P3 and fifth coupling point P5 through microstrip line 13 is set to time t1, the microwave generated at third coupling point P3 at the time shown in (a) of FIG. 11 propagates to fifth coupling point P5 at the time shown in (b) of FIG. 11. That is, at the time shown in (b) of FIG. 11, both the microwave indicated by thick solid line arrow M11 and the microwave indicated by thick solid line arrow M12a occur at fifth coupling point P5.

Accordingly, the two microwaves are added and propagate through microstrip line 13 toward second output part 132, thereby being fed to second output part 132 after a lapse of a predetermined time. In the present embodiment, in order to set the effective propagation time described above equal to time t1, the line distance of first transmission line 13a further away from tube axis L1 than parallel line L4 is set equal to 1/4 of effective length $\lambda_{re}$. The microwave generated at fourth coupling point P4 and indicated by thin solid line arrow M12b, propagates through microstrip line 13 toward first output part 131, and is fed to first output part 131 after a lapse of a predetermined time.

At time t = t0 + T/2 + t1/2 shown in (c) of FIG. 11, the magnetic field indicated by broken line arrow B34 excites cross opening 11. At third coupling point P3, a microwave indicated by thin solid line arrow M13b is generated. The microwave propagates through microstrip line 13 toward first output part 131. The reason why solid line arrow M13b is made thin is the same as the reason why solid line arrow M3 is made thin as described above.

At time t = t0 + T/2 + t1 + t1/2 shown in (d) of FIG. 11, the magnetic field indicated by broken line arrow B41 excites cross opening 11. At fifth coupling point P5, a microwave indicated by thin solid line arrow M14b is generated. At fourth coupling point P4, a microwave indicated by thick solid line arrow M14a is generated. The microwave indicated by thin solid line arrow M14b propagates through microstrip line 13 toward third coupling point P3. The reason why solid line arrow M14b is made thin is the same as the reason why solid line arrow M3 is made thin as described above.

The microwave indicated by thick solid line arrow M14a propagates through microstrip line 13 toward third coupling point P3. In the case where the effective propagation time of the microwave between third coupling point P3 and fourth coupling point P4 through microstrip line 13 is set to time t1, the microwave generated at third coupling point P3 at the time shown in (c) of FIG. 11 propagates to fourth coupling point P4 at the time shown in (d) of FIG. 11.

That is, at the time shown in (d) of FIG. 11, both the microwave indicated by thin solid line arrow M13b and the microwave indicated by thick solid line arrow M14a occur at fourth coupling point P4. In the present embodiment, in order to set the effective propagation time described above equal to time t1, the line distance of second transmission line 13b further away from tube axis L1 than parallel line L4 is set equal to 1/4 of effective length $\lambda_{re}$.

That is, the sum of a line distance of first transmission line 13a further away from tube axis L1 than parallel line L4 and a line distance of second transmission line 13b further away from tube axis L1 than parallel line L4, is set equal to 1/2 of effective length $\lambda_{re}$. The microwave indicated by thin solid arrow M13b propagates in the direction opposite to the microwave indicated by thick solid arrow M14a. Therefore, the microwave indicated by thin solid arrow M13b is canceled and disappears, and is not fed to first output part 131.

At time t = t0 + T + t1/2, as in the case at time t = t0 + t1/2 shown in (a) of FIG. 11, the magnetic field indicated by broken line arrow B12 excites cross opening 11. In this case, although having not been described in the case at the time shown in (a) of FIG. 11, there exists a microwave indicated by thin solid line arrow M14b on microstrip line 13.

At time t = t0 + T + t1/2, the microwave indicated by thin solid line arrow M14b propagates to third coupling point P3. The microwave indicated by thin solid arrow M14b propagates in the direction opposite to the microwaves indicated by thick solid arrow M11 and thick solid arrow M14a. Therefore, the microwave indicated by thin solid arrow M14b is canceled and disappears, and is not fed to first output part 131.

Strictly speaking, at time t = t0 + t1/2, the amount of the microwave propagating from third coupling point P3 is equal to the amount (M11 + M14a - M14b) that is obtained by subtracting the amount of the microwave indicated by thin solid arrow M14b from the amount of the microwaves indicated by thick solid arrows M11 and M14a. Accordingly, the amount of the microwave fed to second output part 132 is equal to the amount (M11+ M12a + M14a - M14b) that is obtained by adding the amount of the microwave indicated by thick solid arrow M12a to the amount of the microwave propagating from third coupling point P3.

In consideration of this, the amount (M11+ M12a + M14a - M14b) of the microwave fed to second output part 132 is much larger than the amount (M12b) of the microwave fed to first output part 131. Therefore, microstrip line 13 outputs, to second output prat 132, most of the microwave rotating counterclockwise that is fed by the reflected wave propagating along arrow 31 and is emitted from cross opening 11. On the other hand, microstrip line 13 outputs, to first output prat 131, most of the microwave rotating clockwise that is fed by the incident wave propagating along arrow 30 and is emitted from cross opening 11.

In the present embodiment, the incident-wave detection unit and the reflected-wave detection unit share microstrip line 13 that faces cross opening 11 disposed in the wall surface of waveguide 10. The incident-wave detection unit extracts an incident wave from one end of microstrip line 13. The reflected-wave detection unit extracts a reflected wave from the other end of microstrip line 13. This configuration makes possible the downsizing of the incident-wave detection unit and the reflected-wave detection unit.

In the present embodiment, directional coupler 6 includes cross opening 11 that is disposed at a position failing to intersect tube axis L1 of waveguide 10 in a plan view, and that emits circularly polarized microwaves. With this configuration, the rotation directions of the circularly polarized microwaves emitted from cross opening 11 are opposite to each other between the incident wave and the reflected wave. By utilizing such a difference in rotation direction between the circularly polarized microwaves, the incident wave and the reflected wave can be separately detected.

With directional coupler 6 according to the present embodiment, first transmission line 13a includes first straight-line portion 13aa and second transmission line 13b includes second straight-line portion 13ba. With this configuration, the number of bent portions at each of which microstrip line 13 is bent can be reduced as compared with conventional ones. The need for bending microstrip line 13 at a right angle can be eliminated. It is possible to keep the bent portions, at each of which microstrip line 13 is bent, away from a region in the vertical direction of cross opening 11. This allows the incident wave and the reflected wave to be separately detected with higher accuracy.

With directional coupler 6 according to the present embodiment, first transmission line 13a and second transmission line 13b are coupled to each other at a position, in a plan view, that is outside rectangular region E1 and is away from tube axis L1. This configuration allows the bent portions, at each of which microstrip line 13 is bent, to be separated farther away from the region in the vertical direction of cross opening 11. This allows both first straight-line portion 13aa and second straight-line portion 13ba to be made longer, thereby reducing the impeding of flowing of the electric current in microstrip line 13. As a result, the incident wave and the reflected wave can be separately detected with much higher accuracy.

With directional coupler 6 according to the present embodiment, first straight-line portion 13aa intersects first elongated hole 11e at a position that is closer to opening-end portion 11ea than opening-center portion 11c, in a plan view. Second straight-line portion 13ba intersects second elongated hole 11f at a position that is closer to opening-end portion 11fa than opening-center portion 11c, in a plan view. In general, the magnetic field generated around opening-end portions 11ea and 11fa is stronger than that generated around opening-center portion 11c. This configuration allows a stronger magnetic field to be coupled to microstrip line 13. Thus, the amount of the electric current flowing in microstrip line 13 is larger. As a result, the incident wave and the reflected wave can be separately detected with much higher accuracy.

With directional coupler 6 according to the present embodiment, first straight-line portion 13aa intersects first elongated hole 11e at right angles in a plan view. With this configuration, the transmission direction of the microwave indicated by solid line arrow M1 generated at first coupling point P1 is made identical, in direction, to rotation direction 32 of the microwave emitted from cross opening 11. This configuration results in a further increase in the amount of the microwave indicated by solid line arrow M1.

The transmission direction of the microwave indicated by solid line arrow M3 generated at first coupling point P1 is made opposite, in direction, to rotation direction 32 of the microwave emitted from cross opening 11. This configuration results in a further decrease in the amount of the microwave indicated by solid line arrow M3. As a result, the incident wave and the reflected wave can be separately detected with much higher accuracy.

With directional coupler 6 according to the present embodiment, second straight-line portion 13ba intersects second elongated hole 11f at right angles in a plan view. With this configuration, the transmission direction of the microwave indicated by solid line arrow M2 generated at second coupling point P2 is made identical, in direction, to rotation direction 32 of the microwave emitted from cross opening 11. This configuration results in a further increase in the amount of the microwave indicated by solid line arrow M2.

The transmission direction of the microwave indicated by solid line arrow M4 generated at second coupling point P2 is made opposite, in direction, to rotation direction 32 of the microwave emitted from cross opening 11. This configuration results in a further decrease in the amount of the microwave indicated by solid line arrow M4. As a result, the incident wave and the reflected wave can be separately detected with much higher accuracy.

With directional coupler 6 according to the present embodiment, microstrip line 13 includes: first straight-line portion 13aa, second straight-line portion 13ba, third straight-line portion 13ab, and fourth straight-line portion 13bb.

First straight-line portion 13aa and third straight-line portion 13ab are adjacent to and coupled to each other so as to make an obtuse angle. Second straight-line portion 13ba and fourth straight-line portion 13bb are adjacent to and coupled to each other so as to make an obtuse angle.

With this configuration, the number of the bent portions at each of which microstrip line 13 is bent can be reduced. This allows a reduction in the impeding of flowing of the electric current in the coupling line. As a result, the incident wave and the reflected wave can be separately detected with much higher accuracy.

With directional coupler 6 according to the present embodiment, the sum of a line distance of first transmission line 13a further away from tube axis L1 than virtual straight line L3 and a line distance of second transmission line 13b further away from tube axis L1 than virtual straight line L3, is set equal to 1/4 of effective length $\lambda_{re}$. With this configuration, the incident wave and the reflected wave can be separately detected with much higher accuracy. It is sufficient for the sum of line distances described above to be set equal to approximately 1/4 of effective length $\lambda_{re}$; the sum is not necessarily set strictly equal to 1/4 of effective length $\lambda_{re}$.

With directional coupler 6 according to the present embodiment, the sum of a line distance of first transmission line 13a further away from tube axis L1 than parallel line L4 and a line distance of second transmission line 13b further away from tube axis L1 than parallel line L4, is set equal to 1/2 of effective length $\lambda_{re}$. With this configuration, the incident wave and the reflected wave can be separately detected with much higher accuracy. It is sufficient for the sum of line distances described above to be set equal to approximately 1/2 of effective length $\lambda_{re}$; the sum is not necessarily set strictly equal to 1/2 of effective length $\lambda_{re}$.

As shown in FIG. 8, in the present embodiment, one end of first transmission line 13a and one end of second transmission line 13b are coupled so as to make a right angle. However, the present disclosure is not limited to this. It is sufficient if one end of first transmission line 13a is coupled to one end of second transmission line 13b at a position out of the region of cross opening 11, in a plan view. In the region, there exists a large influence of the magnetic field.

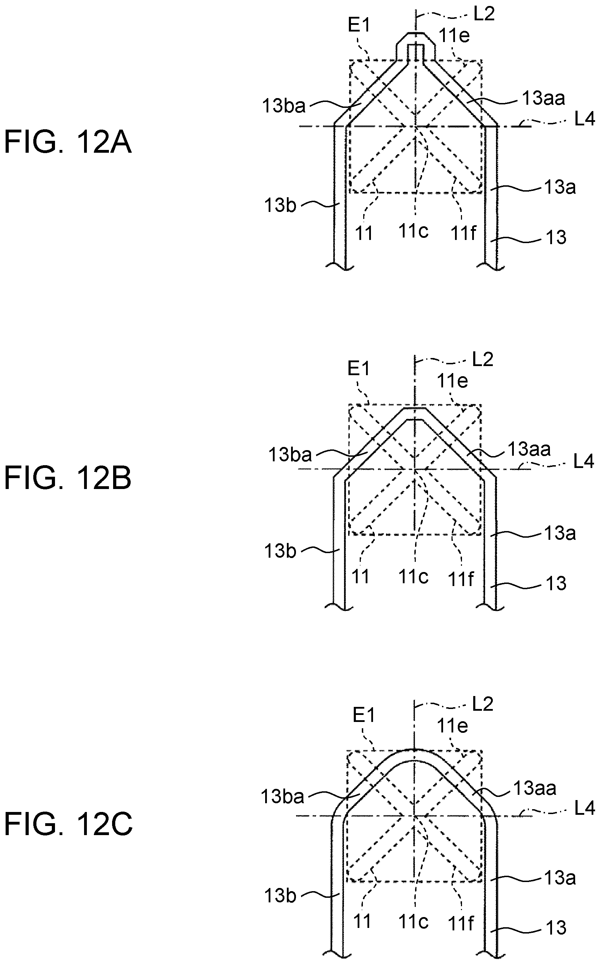

FIGS. 12A to 12F are plan views respectively showing examples of first to sixth modifications of microstrip line 13. As shown in FIG. 12A, both first transmission line 13a and second transmission line 13b may be bent such that the coupling point between one end of first transmission line 13a and one end of second transmission line 13b is separated from opening-center portion 11c.

As shown in FIG. 12B, both first transmission line 13a and second transmission line 13b may be bent such that the coupling point between one end of first transmission line 13a and one end of second transmission line 13b becomes closer to opening-center portion 11c. As shown in FIG. 12C, first transmission line 13a and second transmission line 13b may be curved such that the coupling point between one end of first transmission line 13a and one end of second transmission line 13b becomes closer to opening-center portion 11c.

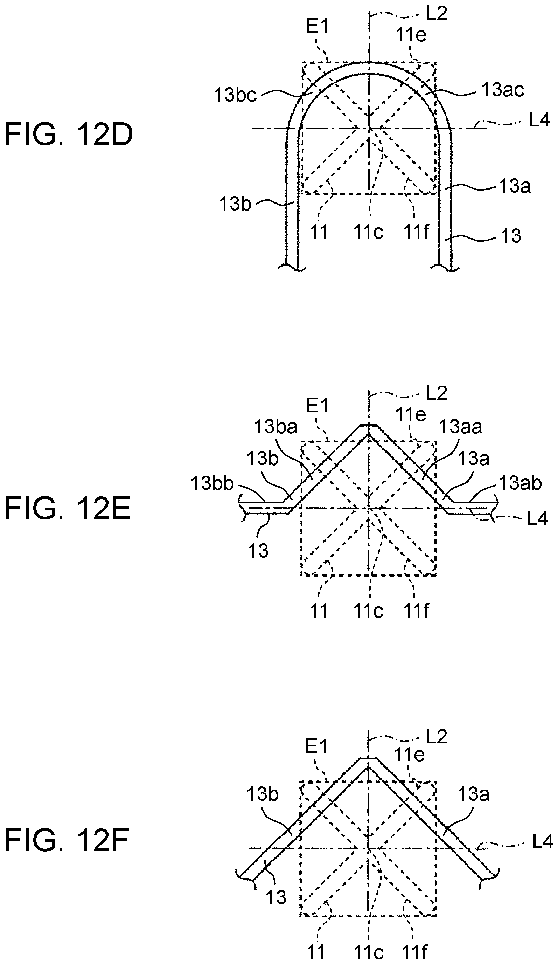

In the present embodiment, first straight-line portion 13aa and second straight-line portion 13ba respectively correspond to the first intersecting-line portion and the second intersecting-line portion. However, the present disclosure is not limited to this. As shown in FIG. 12D, the first intersecting-line portion and the second intersecting-line portion may be respectively circular-arc portion 13ac and circular-arc portion 13bc.

In the present embodiment, both third straight-line portion 13ab and fourth straight-line portion 13bb are parallel to perpendicular line L2. However, the present disclosure is not limited to this. As shown in FIG. 12E, both third straight-line portion 13ab and fourth straight-line portion 13bb may be parallel to parallel line L4.

In the present embodiment, first transmission line 13a and second transmission line 13b each include a plurality of the straight-line portions. However, the present disclosure is not limited to this. As shown in FIG. 12F, each of first transmission line 13a and second transmission line 13b may be configured with one straight-line portion.

In the present embodiment, cross opening 11 is formed to have line symmetry with respect to perpendicular line L2. Perpendicular line L2 is orthogonal to tube axis L1, and passes through opening-center portion 11c. However, the present disclosure is not limited to this. Cross opening 11 may not be formed to have line symmetry with respect to perpendicular line L2. For example, first elongated hole 11e and second elongated hole 11f may cross each other at a position out of each of their own center portions in the longitudinal direction. The length of first elongated hole 11e and the length of second elongated hole 11f may be different from each other.

In these cases, the opening-cross portion at which first elongated hole 11e and second elongated hole 11f cross each other is out of opening-center portion 11c. Cross opening 11 may be formed to have line symmetry with respect to a line that slightly inclines relative to perpendicular line L2, in a plan view.

## INDUSTRIAL APPLICABILITY

The present disclosure is applicable to microwave heating devices for consumer or industrial use.

## REFERENCE MARKS IN THE DRAWINGS

| 1 | heating target object |
|---|---|
| 2 | heating chamber |
| 2a | loading stand |
| 3 | magnetron |
| 4 | microwave emitting part |
| 5 | standing-wave stabilizing part |
| 6, 60 | directional coupler |
| 6a, 6b | detection signal |
| 7 | controller |
| 7a | signal |
| 8 | drive power supply |
| 9 | motor |
| 10 | waveguide |
| 10a | wide plane |
| 10b | bent portion |
| 10d | magnetic field distribution |
| 11 | cross opening |
| 11c | opening-center portion |
| 11d | width |
| 11e | first elongated hole |
| 11ea, 11fa | opening-end portion |
| 11f | second elongated hole |
| 11w | length |
| 12 | printed circuit board |
| 12a | board front surface |
| 12b | board rear surface |
| 13 | microstrip line |
| 13a | first transmission line |
| 13aa | first straight-line portion |
| 13ab | third straight-line portion |
| 13ac, 13bc | circular-arc portion |
| 13b | second transmission line |
| 13ba | second straight-line portion |
| 13bb | fourth straight-line portion |
| 14 | support part |
| 15 | first detector circuit |
| 16 | second detector circuit |
| 18 | first detection output part |
| 18a, 19a | connector |
| 19 | second detection output part |
| 50 | microwave heating device |
| 131 | first output part |
| 132 | second output part |
| 141, 142 | groove |
| E1 | rectangular region |
| L1 | tube axis |
| L2 | perpendicular line |
| L3 | virtual straight line |
| L4 | parallel line |
| P1 | first coupling point |
| P2 | second coupling point |
| P3 | third coupling point |
| P4 | fourth coupling point |
| P5 | fifth coupling point |

**Claims**

1.  A microwave heating device (50), comprising:

    a heating chamber (2) configured to accommodate a heating target object (1);
    a microwave generating unit (3) configured to generate a microwave;
    a waveguide (10) configured to transmit, to the heating chamber (2), the microwave generated by the microwave generating unit (3); and
    a standing-wave stabilizing part (5) configured to stabilize a position of an in-tube standing wave occurring inside the waveguide (10);
    **characterized by**:
    a reflected-wave detection unit (6) disposed closer to the heating chamber (2) than the standing-wave stabilizing part (5), the reflected-wave detection unit (6) being configured to detect a part of a reflected wave of the microwave, the reflected wave returning from the heating chamber (2) to the microwave generating unit (3).

2.  The microwave heating device (50) according to claim 1, wherein the standing-wave stabilizing part (5) includes a projection part protruding into an inside of the waveguide (10).

3.  The microwave heating device (50) according to claim 1,

    wherein the waveguide (10) includes a bent portion (10b); and
    the standing-wave stabilizing part (5) includes the bent portion (10b).

4.  The microwave heating device (50) according to claim 1, wherein the reflected-wave detection unit (6) and the standing-wave stabilizing part (5) are disposed and separated from each other in a direction of transmission of the microwave, by a distance equal to an odd multiple of 1/4 of an in-tube wavelength of the in-tube standing wave.

5.  The microwave heating device (50) according to claim 1, further comprising
    an incident-wave detection unit (6) configured to detect a part of an incident wave being a microwave propagating from the microwave generating unit (3) to the heating chamber (2).

6.  The microwave heating device (50) according to claim 5,

    wherein the waveguide (10) includes a wall surface including an opening (11);
    the incident-wave detection unit (6) and the reflected-wave detection unit (6) share a coupling line (13) facing the opening (11), the coupling line (13) having one end and another end;
    the incident-wave detection unit (6) is configured to extract the incident wave from the one end of the coupling line (13); and
    the reflected-wave detection unit (6) is configured to extract the reflected wave from the another end of the coupling line (13).

7.  The microwave heating device (50) according to claim 6,

    wherein the opening (11) includes:

    a first elongated hole (11e); and
    a second elongated hole (11f), the first elongated hole (11e) and the second elongated hole (11f) crossing each other at an opening-cross portion;

    the waveguide (10) has a tube axis (L1) and the opening (11) is disposed at a position that fails to intersect the tube axis (L1) in a plan view;
    the coupling line (13) includes:

    a first transmission line (13a) having one end and including a first intersecting-line portion having one end; and
    a second transmission line (13b) having one end and including a second intersecting-line portion having one end;

the first intersecting-line portion passes through the opening-cross portion, extends away from the tube axis (L1) as approaching a perpendicular line (L2) orthogonal to the tube axis (L1), intersects the first elongated hole (11e) at a position farther away from the tube axis (L1) than the opening-cross portion, and is coupled to the one end of the second intersecting-line portion at outside a rectangular region circumscribing the opening (11), in a plan view;

the second intersecting-line portion extends away from the tube axis (L1) as approaching the perpendicular line (L2), intersects the second elongated hole (11f) at a position farther away from the tube axis (L1) than the opening-cross portion, and is coupled to the one end of the first intersecting-line portion at outside the rectangular region circumscribing the opening (11), in a plan view; and

the one end of the first transmission line (13a) and the one end of the second transmission line (13b) are coupled to each other at a position out of a region in a vertical direction of the opening (11).

8. The microwave heating device (50) according to claim 1, further comprising:
a second reflected-wave detection unit disposed closer to the microwave generating unit (3) than the standing-wave stabilizing part (5), the second reflected-wave detection unit being configured to detect a part of the reflected wave.

**Patentansprüche**

1. Mikrowellenheizgerät (50), das aufweist:

eine Heizkammer (2), die konfiguriert ist, um ein zu heizendes Zielobjekt (1) unterzubringen;
eine Mikrowellen erzeugende Einrichtung (3), die konfiguriert ist, um eine Mikrowelle zu erzeugen;
einen Wellenleiter (10), der konfiguriert ist, um die Mikrowelle, die durch die Mikrowellen erzeugende Einrichtung (3) erzeugt worden ist, zu der Heizkammer (2) zu übertragen; und
einen Stabilisationsabschnitt (5) für eine stehende Welle, der konfiguriert ist, um eine Position einer im Rohr stehenden Welle zu stabilisieren, die innerhalb des Wellenleiters (10) auftritt;
**gekennzeichnet durch**:
eine Erfassungseinrichtung (6) für eine reflektierte Welle, die dichter an der Heizkammer (2) als der Stabilisationsabschnitt (5) für die stehende Welle angeordnet ist, wobei die Erfassungseinrichtung (6) für die reflektierte Welle konfiguriert ist, um einen Teil von einer reflektierten Welle von der Mikrowelle zu erfassen, wobei die reflektierte Welle von der Heizkammer (2) zu der Mikrowellen erzeugenden Einrichtung (3) zurückkehrt.

2. Mikrowellenheizgerät (50) gemäß Anspruch 1, wobei der Stabilisationsabschnitt (5) für eine stehende Welle einen Projektionsabschnitt enthält, der sich zu einer Innenseite von dem Wellenleiter (10) fortsetzt.

3. Mikrowellenheizgerät (50) gemäß Anspruch 1,
wobei der Wellenleiter (10) einen gebogenen Abschnitt (10b) enthält; und der Stabilisierungsabschnitt (5) für eine stehende Welle enthält den gebogenen Abschnitt (10b).

4. Mikrowellenheizgerät (50) gemäß Anspruch 1, wobei die Erfassungseinrichtung (6) für eine reflektierte Welle und der Stabilisierungsabschnitt (5) für eine stehende Welle in einer Richtung der Übertragung von der Mikrowelle angeordnet und über einen Abstand getrennt voneinander sind, der gleich einem ungraden Vielfachen von 1/4 von einer Wellenlänge in der Röhre der stehenden Welle in der Röhre ist.

5. Mikrowellenheizgerät (50) gemäß Anspruch 1, das ferner aufweist,
eine Erfassungseinrichtung (6) für eine einfallende Welle, die konfiguriert ist, einen Teil von einer einfallenden Welle zu erfassen, die eine Mikrowelle ist, die sich von der Mikrowellen erzeugenden Einrichtung (3) zu der Heizkammer (2) ausbreitet.

6. Mikrowellenheizgerät (50) gemäß Anspruch 5,

wobei der Wellenleiter (10) eine Wandoberfläche enthält, die eine Öffnung (11) enthält;
wobei die Erfassungseinrichtung (6) für eine einfallende Welle und die Erfassungseinrichtung (6) für eine reflektierte Welle einen Kopplungsleiter (13) teilen, der der Öffnung (11) gegenüber ist, wobei der Kopplungsleiter (13) ein Ende und ein anderes Ende hat;
wobei die Erfassungseinrichtung (6) für eine einfallende Welle konfiguriert ist, um die einfallende Welle von dem einen Ende von dem Kopplungsleiter (13) zu extrahieren; und

wobei die Erfassungseinrichtung (6) für eine reflektierte Welle konfiguriert ist, um die reflektierte Welle von dem anderen Ende von dem Kopplungsleiter (13) zu extrahieren.

7. Mikrowellenheizgerät (50) gemäß Anspruch 6, wobei die Öffnung (11) enthält:

ein erstes längserstrecktes bzw. längliches Loch (11e); und
ein zweites längserstrecktes bzw. längliches Loch (11f), wobei das erste längserstreckte Loch (11e) und das zweite längserstreckte Loch (11f) einander an einem Öffnungskreuzungsabschnitt überschneiden;
der Wellenleiter (10) hat eine Röhrenachse (L1) und die Öffnung (11) ist an einer Position angeordnet, die nsich icht mit der Röhrenachse (L1) in einer ebenen Ansicht überschneidet;
der Kopplungsleiter (13) enthält:

einen ersten Übertragungsleiter (13a), der ein Ende hat und enthält einen ersten Überschneidungsleiterabschnitt, der ein Ende hat; und
einen zweiten Übertragungsleiter (13b), der ein Ende hat und enthält einen zweiten Überschneidungsleiterabschnitt, der ein Ende hat;
der erste Überschneidungsleiterabschnitt geht durch den Öffnungskreuzungsabschnitt hindurch, erstreckt sich von der Röhrenachse (L1) weg während er sich einer senkrechten Linie (L2) orthogonal zu der Röhrenachse (L1) annähert, überschneidet das erste längserstreckte bzw. längliche Loch (11e) an einer Stelle, die weiter entfernt von der Röhrenachse (L1) ist als der Öffnungskreuzungsabschnitt, und ist an das eine Ende von dem zweiten Überschneidungsleiterabschnitt an einer Außenseite eines rechtwinkligen Bereiches angekoppelt, der die Öffnung (11) umgibt, in einer Draufsicht; und
das eine Ende von dem ersten Übertragungsleiter (13a) und das eine Ende von dem zweiten Übertragungsleiter (13b) sind an einer Position außerhalb eines Bereichs in einer vertikalen Richtung von der Öffnung (11) aneinander gekoppelt.

8. Mikrowellenheizgerät (50) gemäß Anspruch 1, das ferner aufweist:
eine zweite Erfassungseinrichtung für eine reflektierte Welle, die dichter an der Mikrowellen erzeugenden Einrichtung (3) angeordnet ist als der Stabilisierungsabschnitt (5) für eine stehende Welle, wobei die zweite Erfassungseinrichtung für eine reflektierte Welle konfiguriert ist, um einen Teil der reflektierten Welle zu erfassen.

**Revendications**

1. Dispositif de chauffage par micro-ondes (50), comprenant :

une chambre de chauffage (2) configurée pour recevoir un objet cible soumis à un chauffage (1) ;
une unité de génération de micro-ondes (3) configurée pour générer une micro-onde ;
un guide d'ondes (10) configuré pour transmettre, à la chambre de chauffage (2), la micro-onde générée par l'unité de génération de micro-ondes (3) ; et
une partie de stabilisation d'ondes stationnaires (5) configurée pour stabiliser une position d'une onde stationnaire interne de tube se produisant à l'intérieur du guide d'ondes (10) ;
**caractérisé par** :
une unité de détection d'ondes réfléchies (6) disposée plus près de la chambre de chauffage (2) que la partie de stabilisation d'ondes stationnaires (5), l'unité de détection d'ondes réfléchies (6) étant configurée pour détecter une partie d'une onde réfléchie de la micro-onde, l'onde réfléchie revenant de la chambre de chauffage (2) vers l'unité de génération de micro-ondes (3).

2. Dispositif de chauffage par micro-ondes (50) selon la revendication 1, dans lequel la partie de stabilisation d'ondes stationnaires (5) comprend une partie en saillie faisant saillie dans un intérieur du guide d'ondes (10).

3. Dispositif de chauffage par micro-ondes (50) selon la revendication 1,

dans lequel le guide d'ondes (10) comprend une partie coudée (10b) ; et
la partie de stabilisation d'ondes stationnaires (5) comprend la partie courbée (10b).

4. Dispositif de chauffage par micro-ondes (50) selon la revendication 1, dans lequel l'unité de détection d'ondes réfléchies (6) et la partie de stabilisation d'ondes stationnaires (5) sont disposées et séparées l'une de l'autre dans une direction de transmission de la micro-onde, par une distance égale à un multiple impair de 1/4 d'une longueur d'onde interne de tube de l'onde stationnaire interne de tube.

5. Dispositif de chauffage par micro-ondes (50) selon la revendication 1, comprenant en outre
une unité de détection d'ondes incidentes (6) configurée pour détecter une partie d'une onde incidente étant une micro-onde se propageant depuis l'unité de génération de micro-ondes (3) vers la chambre de chauffage (2).

6. Dispositif de chauffage par micro-ondes (50) selon la revendication 5,

   dans lequel le guide d'ondes (10) comprend une surface de paroi comprenant une ouverture (11) ;
   l'unité de détection d'ondes incidentes (6) et l'unité de détection d'ondes réfléchies (6) partagent une ligne de couplage (13) faisant face à l'ouverture (11), la ligne de couplage (13) ayant une première extrémité et une autre extrémité ;
   l'unité de détection d'ondes incidentes (6) est configurée pour extraire l'onde incidente de la première extrémité de la ligne de couplage (13) ; et
   l'unité de détection d'ondes réfléchies (6) est configurée pour extraire l'onde réfléchie de l'autre extrémité de la ligne de couplage (13).

7. Dispositif de chauffage par micro-ondes (50) selon la revendication 6,

   dans lequel l'ouverture (11) comprend :

      un premier trou allongé (11e) ; et
      un deuxième trou allongé (11f), le premier trou allongé (11e) et le deuxième trou allongé (11f) se croisant au niveau d'une partie d'ouverture en croix ;

   le guide d'ondes (10) a un axe de tube (L1) et l'ouverture (11) est disposée à une position qui ne coupe pas l'axe de tube (L1) dans une vue en plan ;
   la ligne de couplage (13) comprend :

      une première ligne de transmission (13a) ayant une extrémité et comprenant une première partie de ligne d'intersection ayant une extrémité ; et
      une deuxième ligne de transmission (13b) ayant une extrémité et comprenant une deuxième partie de ligne d'intersection ayant une extrémité ;

   la première partie de ligne d'intersection passe à travers la partie d'ouverture en croix, s'éloigne de l'axe de tube (L1) en s'approchant d'une ligne perpendiculaire (L2) orthogonale à l'axe de tube (L1), coupe le premier trou allongé (11e) à une position plus éloignée de l'axe de tube (L1) que la partie d'ouverture en croix, et est couplée à la première extrémité de la deuxième partie de ligne d'intersection à l'extérieur d'une région rectangulaire entourant l'ouverture (11), dans une vue en plan ;
   la deuxième partie de ligne d'intersection s'étend à l'écart de l'axe de tube (L1) à l'approche de la ligne perpendiculaire (L2), croise le deuxième trou allongé (11f) à une position plus éloignée de l'axe de tube (L1) que la partie d'ouverture en croix, et est couplée à la première extrémité de la première partie de ligne d'intersection à l'extérieur de la région rectangulaire entourant l'ouverture (11), dans une vue en plan ; et
   la première extrémité de la première ligne de transmission (13a) et la première extrémité de la deuxième ligne de transmission (13b) sont couplées l'une à l'autre à une position hors d'une région dans une direction verticale de l'ouverture (11).

8. Dispositif de chauffage par micro-ondes (50) selon la revendication 1, comprenant en outre :
une deuxième unité de détection d'ondes réfléchies disposée plus près de l'unité de génération de micro-ondes (3) que la partie de stabilisation d'ondes stationnaires (5), la deuxième unité de détection d'ondes réfléchies étant configurée pour détecter une partie de l'onde réfléchie.

# FIG. 1

# FIG. 2

# FIG. 3

# FIG. 4

# FIG. 5

# FIG. 6

# FIG. 7

# FIG. 8

# FIG. 9

(a) t=t0

(b) t=t0+t1

(c) t=t0+T/2

(d) t=t0+T/2+t1

EP 3 784 002 B1

# FIG. 10

EP 3 784 002 B1

# FIG. 11

EP 3 784 002 B1

FIG. 12A

FIG. 12B

FIG. 12C

**FIG. 12D**

**FIG. 12E**

**FIG. 12F**

# FIG. 13

ICE->WATER | WATER

SIGNAL INTENSITY

INCIDENT WAVE

AMOUNT OF MICROWAVE ABSORBED BY HEATING TARGET OBJECT

FINISH OF THAWING

REFLECTED WAVE

-20°C  0°C  20°C  40°C

TEMPERATURE OF HEATING TARGET OBJECT

**EP 3 784 002 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5816820 B

- US 2015244055 A1